# EUROPEAN PATENT APPLICATION

(11) **EP 3 588 038 A1**
(43) Date of publication of application: **01.01.2020**
(21) Application number: 18400019.8
(22) Date of filing: 21.06.2018
(51) Int. Cl.: G01L 3/10, G01L 3/14, G01L 25/00, G01L 5/16

(54) **A MEASURING APPARATUS FOR DETERMINING LOADS CAUSED BY MOMENTS AND FORCES**

(71) Applicant: AIRBUS HELICOPTERS DEUTSCHLAND GmbH, 86609 Donauwörth (DE)
(72) Inventor: Pfaller, Rupert, D-85521 Riemerling (DE); Buesing, Moritz, D-86154 Augsburg (DE); Ortner, Martin, D-82008 Unterhaching (DE)
(74) Representative: GPI & Associés

(57) **Abstract**

A measuring apparatus 1 for determining loads applied to a first component 2 that is connected to a second component 3 and that is subject to being affected by torsion, bending moments, axial forces, and shear forces, comprises a first end 2a that receives the first component 2, a second end 3a that is connected to the second component 3, and a torsion component 6 that is arranged between the first end 2a and second ends 3a. The torsion component 6 provides torsion stiffness. The measuring apparatus 1 further comprises at least two bending components 5 that are arranged between the first end 2a and second ends 3a, and a plurality of sensors 4 that are arranged on the torsion component 6 and on the at least two bending components 5. The at least two bending components 5 provide bending stiffness and extend radially from the torsion component 6.

## Description

The invention is related to a measuring apparatus for determining loads applied to a component, and, more particularly, to a measuring apparatus that is coupled between two components and determines loads applied to one of the components when this component is affected by torsion, bending moments, axial forces, or shear forces.

Conventionally, the fatigue failure of materials is modelled as a result of cyclic hardening and softening, crack initiation, and crack propagation, which ultimately leads to final fracture. Operational experience has shown that the number of cycles to failure increases linearly with the number of cycles to crack initiation, which is independent of the stress amplitude. At low stress amplitudes, the crack initiation stage can last a majority of the fatigue life, whereas at high stress amplitudes, the crack initiation is usually accomplished within a small fraction of the fatigue life.

The alternating stresses exerted on each rotor blade of the main rotor of a helicopter have their origin in the loads imposed on the rotor blade during operation of the helicopter. Three types of rotor blade loads are significant: axial loads, out-of-plane bending loads caused by flapping moments, and in-plane bending loads caused by lead-lag moments.

Axial loads on rotor blades stem from the rotation of the rotor and the corresponding centrifugal forces. The rotor blades are exposed to a major alternating stress cycle each time the rotor is accelerated from rest to its operating revolutions per minute (rpm) and each time the rotor is decelerated from its operating rpm to rest at the end of the flight cycle.

Out-of-plane (flapping) bending loads on rotor blades of the main rotor stem from lift and dynamic forces, which are generated by the rotation of the main rotor and result in upward bending of the outer sections of the rotor blades. The out-of-plane bending loads produce tensile and compressive stresses in the rotor blades during each in-flight manoeuvre.

In-plane (lead-lag) bending loads on rotor blades of the main rotor stem from drag and dynamic forces, which are generated by the rotation of the main rotor. The in-plane bending loads produce tensile and compressive stresses. Stress cycles may occur several times during each revolution of the main rotor because of the effects of advancing and retreating of the rotor blades.

Furthermore, rotor blades are often constructed with a structural stiffness that prevents twisting in response to pitch angle changes at the rotor hub. Thus, pitch angle adjustments together with aerodynamic profile forces cause major stresses in form of torsional loads on the rotor blades.

The two above-mentioned bending moments, lead-lag and flap bending moments are also caused by forces which can cause shear forces at rotor blades. Shear forces can cause delaminations in rotor blades made from composite material.

Accordingly, an early detection of fatigue cracks which may be caused by the above-mentioned six types of loads on rotor blades is particularly important for flight safety. As a consequence, it is often required to measure the above-mentioned six types of loads on rotor blades and to predict the occurrence of fatigue cracks at the rotor blades and/or prevent failure of the rotor blades based on the measurements in order to ensure the operational safety of the helicopter.

Document US 5,027,663 A describes a measuring device for determining a torque of a rotating mechanical part that includes a torsion element formed as a spoke wheel with at least one radially extending bending rod which is also referred to as a first spoke, a rigid part, at least one second spoke, at least one stop, and a measuring pickup having a measuring element connected with the rigid part, and another measuring element connected with the at least one second spoke. First spokes are securely connected with a hub and the spoke wheel. Second spokes are fixed to the hub but are separated from the rim. The second spokes that are having one free end are thicker than the first spokes, so that they have a high mechanical bending strength. Stops are located in the area of the free ends of the second spokes to the left and to the right of the ends in the rotating direction such that an angle of rotation of the second spokes of approximately 0.3° to 0.7° is achievable. A corresponding angle of rotation of the second spokes is achieved when a determined driving torque is introduced.

However, if a determined torque is exceeded, the second spokes come to rest at the stops. The additional torque is transmitted via the stops, so that the first spokes, the bending rods, are protected from unacceptably high torques. Accordingly, a so-called overload protection is possible, which prevents the first spokes from breaking.

Document US 2012/137790 A1 describes a torque detector that includes an output body, an input body adapted to permit a torque to be applied thereto, a torque beam unit, and a detecting unit disposed between the input and output bodies for converting a relative rotation of the input and output bodies into an electric signal. The input body has a disk portion parallel to the output body, and a force application portion extending from the disk portion away from the output unit. The torque beam unit includes a shaft, at least one flexible first beam extending radially and outwardly from the shaft and having a proximate end portion connected to the shaft, and a distal end portion connected to and being co-rotatable with the output body, and at least one second flexible beam extending radially and outwardly from the shaft in a direction different from that of the first beam and having a proximate end portion connected to the shaft, and a distal end portion connected to and co-rotatable with the input body.

When torque is applied to the force application portion, the input body is rotated relative to the output body to deform the torque beam unit. During rotation of the input body relative to the output body, conductors slide on resistor members and conductive members to result in a change in the resistance value of each of the resistor members. Hence, each of the output contact pins generates an electric signal corresponding to the angular displacement of the input body relative to the output body. Consequently, the torque applied to the force application portion can be detected.

Document JP2003050171 describes a method and an apparatus for measuring a multi-component force. The multiple force detection device comprises two strain gauges that are provided on each of four sensitive surfaces of four prism-shaped sensitive beams. A detector body consisting of a bridge circuit of four strain gauges is fixed to opposing sensitive surfaces. The device further comprises: an arithmetic conversion device for converting the output signal of the bridge circuit into a set of six force components (the forces applied to the x, y, z axes and the moments (Mx, My, Mz) around these axes), and a correction arithmetic device for performing at least a primary interference correction of the interference of these six force components.

However, most current solutions that are based on solid measurement apparatuses, which are equipped with strain gauges, do not allow a measurement of torsion moments due to the low strains of torsion moments, which result from the dimensioning of the rotor blades for sufficient fatigue life.

Moreover, measuring devices for multiaxial measurements are often complicated and have discrete bearings. Discrete bearings need significant reinforcements for fatigue resistance and/or have to be replaced after a certain time of fatigue loading.

Based on the limitations and drawbacks of the prior art, an objective is to provide an apparatus for determining loads applied to a component that is affected by torsion, bending moments, axial forces, and shear forces, and that allows to measure the torsion moments which in turn enable the determination of sufficient fatigue life.

This objective is solved by an apparatus comprising the features of claim 1.

More specifically, a measuring apparatus for determining loads applied to a first component that is connected to a second component and that is subject to being affected by torsion, bending moments, axial forces, or shear forces, comprises a first end that receives the first component, a second end that is connected to the second component, and a torsion component that is arranged between the first and second ends. The torsion component provides torsion stiffness and comprises a hollow element with a closed cross section and at least two surfaces. The measuring apparatus further comprises at least two bending components that are arranged between the first and second ends and a plurality of sensors that are arranged on the torsion component and on the at least two bending components. The at least two bending components provide bending stiffness and extend radially from the torsion component.

According to some embodiments, in which the first component includes a rotor blade, bending moments around the two axes of the rotor blade that are created by flapping and lead-lag moments, shear forces, and torsion moments may be measured at the same time with the measuring apparatus.

According to some embodiments, the measuring apparatus may have a cruciform or star-like cross section, a hollow inner part, and may include any number of the bending components.

According to some embodiments, more than one web may be associated with each flange. The webs may be arranged in a symmetric axis around a longitudinal axis that extends through the first and second ends of the measuring apparatus.

According to some embodiments, the total cross section of the webs is thinner than the cross section of the flange that the webs are associated with.

According to some embodiments, the webs and flanges may have a material or geometry that results in a small contribution to the torsion stiffness.

According to some embodiments, the torsion component may have a material or geometry that allows the torsion component having a small contribution to the torsion stiffness.

According to some embodiments, at least some sensors of the plurality of sensors are arranged on the at least two surfaces of the hollow element at locations where the closed cross section thickness of the hollow element is the smallest. Arranging the sensors on the at least two surfaces in a symmetric layout around a center of the hollow element may allow to measure the strain for the torsion moments and cancel out the effects of the bending moments and shear forces.

According to some embodiments, the sensors may be coupled in a bridge circuit and applied in a symmetric pattern around a longitudinal axis that extends through the first and second ends of the measuring apparatus. For example, the sensors may be oriented in a +/- 45° direction relative to the longitudinal axis of the measuring apparatus. The bridge circuit for the sensors may form a Wheatstone bridge that may eliminate strains in the same or in the opposite direction e.g. tension or compression strains on opposite locations or on perpendicular directions of the moments and forces. Combining at least two sensors in a Wheatstone bridge may allow to measure a type of load approximated by a corresponding strain effectively without the influence of another load. Therefore, the influence of one force or moment on the other ones may be canceled out.

Flanges may be arranged at the outer edges of the measuring apparatus, thereby having large contributions to the bending stiffnesses and being subjected to the largest bending strains. The strains from shear or torsion are very low on these outer edges of the measuring apparatus and the main stain has a different direction. Placing strain gauges at these outer edges enables the precise measurement of bending moments. Applying multiple strain gauges in a symmetric pattern around the longitudinal axis of the measuring apparatus allows cancelling out measurements from an axial force with the help of a bridge circuit. Averaging the strain measurements of these strain gauges allows measuring the axial force while cancelling out the measuring of the bending moments.

Thin webs are placed between the flanges and the hollow inner part to inhibit shear deformations between the flanges and the hollow inner part. The flow of the shear stress is forced along these webs. The thin webs may lead to large shear strains for a given shear deformation. However, the shear strain from torsion may be comparatively small in the thin webs. In fact, the two strains in a perpendicular direction have an opposite sign in contrast to the two perpendicular shear strains which have the same sign.

A configuration with many highly independent measurement locations allows independent sizing of the different elements including the hollow inner part, the webs, and the flanges for suitable strain values. The influence of one force or moment on the other ones is low. Thus, precise results are obtained without the use of a correction matrix.

As a consequence, a single measurement apparatus can determine bending moments as well as torsion moments and shear forces, which is very important for the design of bearingless main rotors (BMRs). In addition, the measuring apparatus may be realized as one solid piece, and the geometric and mechanical complexity may be much lower compared to off the shelf solutions.

According to some embodiments, the measuring apparatus may be manufactured by conventional machining methods such as turning, boring, drilling, milling, broaching, sawing, shaping, planing, reaming, tapping, 3-D printing etc.

According to some embodiments, the measuring apparatus may allow to evaluate a complete model for numerical method calculations such as finite element methods.

According to some embodiments, the measuring apparatus may receive a component such as a wheel, a rotary blade, a rotary transmission of a vehicle, etc. In some scenarios, the component may be a rotor blade of a rotorcraft. In these scenarios, the measuring apparatus may allow to evaluate a flapping hinge distance of the rotor blade based on component tests that may involve rotor blade root end bending.

Component tests with the measuring apparatus may also enable a complex flexbeam design, for example, where a measurement of the flap bending moments is not possible.

According to one aspect, the plurality of sensors may include strain gauges for determining strains of at least one of the torsion components or the at least two bending components. At least one of torsion, bending moments, axial forces, or shear forces applied to the first component is determined based on the strains.

According to one aspect, at least a portion of the plurality of sensors may be coupled in a bridge circuit.

According to one aspect, at least one sensor of the plurality of sensors may be arranged at a location that is essentially centered on at least one of the at least two surfaces.

According to one aspect, at least one of the at least two bending components may include a flange having a first cross section diameter and a web having a second cross section diameter.

According to one aspect, the first cross section diameter is greater than the second cross section diameter.

According to one aspect, shear forces cause a bigger strain in the web than in the flange.

According to one aspect, the web may be arranged between the flange and the torsion component.

According to one aspect, at least one sensor of the plurality of sensors may be arranged on the flange at a predetermined location.

According to one aspect, the measuring apparatus may include a plate that is attached to the torsion component and an additional bending component that is arranged between the plate and the first end.

According to one aspect, the measuring apparatus may include a plate that is attached to the torsion component and an additional bending component that is arranged between the plate and the second end.

According to one aspect, a longitudinal axis extends perpendicularly from the plate, and the additional bending component may include at least one flange that extends parallel to the longitudinal axis from the plate, and at least one diagonal web that extends diagonally to the longitudinal axis from the plate.

According to one aspect, at least one sensor of the plurality of sensors may be arranged on the at least one diagonal web.

According to one aspect, the at least one flange and the at least one diagonal web may be spatially separated from each other.

Moreover, a rotorcraft may include the measuring apparatus as described above.

Embodiments are outlined by way of example in the following description with reference to the attached drawings. In these attached drawings, identical or identically functioning components and elements are labeled with identical reference numbers and characters and are, consequently, only described once in the following description.
- Figure 1 is a diagram of an illustrative measuring apparatus located between a first and a second component, that is connected to the first component by a bracket in accordance with some embodiments,
- Figure 2 is a diagram of an illustrative cross section perpendicular to a longitudinal axis of a measuring apparatus in accordance with some embodiments,
- Figure 3A is a diagram of an illustrative cross section parallel to a longitudinal axis of a measuring apparatus located between a first and a second component that is connected to the first component by a bracket in accordance with some embodiments,
- Figure 3B is a diagram of an illustrative cross section parallel to a longitudinal axis of a measuring apparatus that is connected to a first component by an adhesive substance in accordance with some embodiments,
- Figure 4A is a diagram of an illustrative measuring apparatus that includes an additional bending component between a plate and a first end of a measuring apparatus in accordance with some embodiments,
- Figure 4B is a diagram of an illustrative measuring apparatus that includes an additional bending component between a plate and a second end of a measuring apparatus in accordance with some embodiments, and
- Figure 5 is a diagram of an illustrative sectional view of a bending component of a measuring apparatus in accordance with some embodiments.

Exemplary embodiments may be used with any devices or vehicles with a component that is subject to being affected by torsion, bending moments, axial forces, and shear forces. Examples for devices may include wind turbines, motors, rotors, dynamometers, etc. Examples for vehicles may include airplanes, quadcopters, helicopters, drones, cars, buses, trucks, bicycles, motorcycles, ships, etc. Examples for the component may include weapon systems, additional fuel tanks, antennas, cargo hooks, and rotary wings of an aircraft, rotary transmissions, wheels, rotary shafts of a vehicle, etc. If desired, the component may be a rotor blade of a rotorcraft.

As an example, consider the scenario in which the measuring apparatus is connected to a rotor blade as the first component and to a rotor hub of a rotorcraft as the second component. In this scenario, the measurement of six types of loading may be desirable: torsional loads caused by pitch movements of the rotor blade, axial loads, out-of-plane bending loads caused by flapping moments of the rotor blade, and in-plane bending loads caused by lead-lag moments of the rotor blade. The bending loads may produce tensile and compressive stresses in the rotor blade. Accordingly, tensile and compressive stresses may cause shear stresses in a cross section of the rotor blade, thus, it may also be desirable to measure strains from the shear forces independently from the other loads and moments.

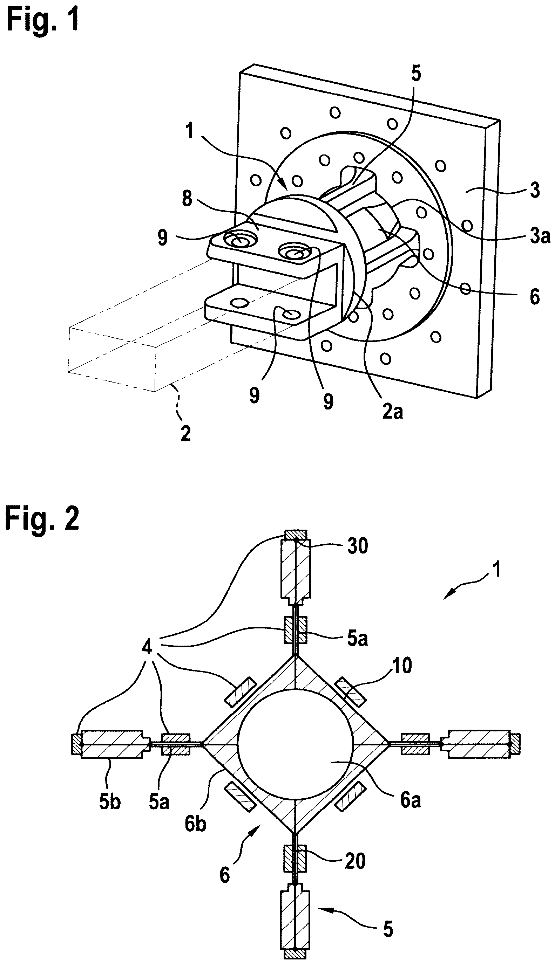

Figure 1 shows illustrative measuring apparatus 1 that is connected at first end 2a with first component 2 and at second end 3a with second component 3. Measuring apparatus 1 may include torsion component 6 and bending components 5. As shown, torsion component 6 may be arranged between first end 2a and second end 3a of measuring apparatus 1. If desired, bending components 5 may be arranged between first and second ends 2a, 3a of the measuring apparatus and extend radially from torsion element 6.

In some embodiments, end 2a of measuring apparatus 1 may include bracket 8 with sockets 9. Consider the scenario in which component 2 is a rotor blade of a rotorcraft. In this scenario, the rotor blade may be connected to end 2a. For example, the rotor blade may be screwed to sockets 9 of bracket 8 with its peripheral structure. End 3a of measuring apparatus 1 may be attached to a rigid part. For example, component 3 may include a jig which is connected to end 3a.

In this scenario, six types of loads may be significant for component 2 during operation of the rotorcraft: torsional loads caused by pitch movements, axial loads caused by rotational movements, out-of-plane bending loads of the rotor blade caused by flapping moments, and in-plane bending loads of the rotor blade caused by lead-lag moments. The bending loads may produce tensile and compressive stresses, which may cause shear stresses in a cross section of the first component. Thus, it may be desirable to measure strains from the shear forces independently from other loads and moments.

Torsion component 6 of measuring apparatus 1 may provide torsion stiffness. Torsion component 6 may be subject to the majority of the strains from torsion moments and partially axial forces. Bending components 5 may provide bending stiffness. Bending components 5 may be subject to the bending loads on the rotor blade, which may be caused by flapping and lead-lag moments. Bending components 5 may be subject to the majority of the strains from bending moments and shear forces, which may be caused by flapping and lead-la'g moments exerted on the rotor blade.

Figure 2 shows an illustrated cruciform cross section of measuring apparatus 1 that includes torsion component 6, four bending components 5 that extend radially from torsion component 6, and a plurality of sensors 4. Torsion component 6 may include hollow element 6a with a closed cross section and four surfaces 6b. Each bending component 5 may include web 5a and flange 5b attached to web 5a.

If desired, sensors 4 may be arranged on torsion component 6 and on bending components 5. In some embodiments, sensors 4 may include strain gauges for determining strains exerted on torsion component 6 or on bending components 5. Strain gauges may convert deformation into an electrical signal. For example, a strain experienced by a strain gauge may be converted into a change in capacitance, inductance, and/or resistance. The change in capacitance, inductance, and/or resistance may be proportional to the strain experienced by the strain gauge. If desired, the strain gauge may change resistance due to the deformations of the surface to which the strain gauge is attached. Therefore, axial, bending, shear, and torsional strains may be measured by strain gauges. Each of the axial, bending, shear, and torsional strains may have a different strain gauge arrangement.

As shown, torsion component 6 may include hollow element 6a, which is formed as a round tube with a closed cross section, and four surfaces 6b. In other words, torsion component 6 may include a hollow element 6a with an inner cross section that has a circular shape and an outer cross section in form of a square that provides surfaces 6b. If desired, torsion component 6 may have a hollow element with inner and outer cross sections that have any shape. For example, hollow element 6a may have an inner cross section in form of a polygonal shape such as a triangular shape, a square shape, a rectangular shape, a pentagonal shape, a hexagonal shape, a heptagonal shape, an octagonal shape, etc. If desired, hollow element 6a may have a cross section in form of a round shape, an oval shape, or an elliptical shape. Hollow element 6a may have as outer cross section any polygonal shape such as a triangular shape, a rectangular shape, a pentagonal shape, a hexagonal shape, a heptagonal shape, an octagonal shape, etc. If desired, hollow element 6a may have as outer cross section a round shape, an oval shape, or an elliptical shape.

The majority of the torsion stiffness of torsion component 6 is provided by hollow element 6a. Accordingly, torsion moments of component 2 may cause large strains on hollow element 6a, in particular at locations 10 where the cross section of hollow element 6a is thinnest, such as for example in the center of surfaces 6b.

As shown in Figure 2, sensors 4 for determining the strains caused by torsion moments may be arranged at locations 10. If desired, sensors 4 may be arranged in a symmetric layout at locations 10 around the center of hollow element 6a. Sensors 4 may enable the measurement of the strains caused by torsion moments and cancel out the effects of bending moments and shear forces.

In some embodiments, measuring apparatus 1 may have a starlike cross section. If desired, measuring apparatus 1 may include any number of bending components 5. For example, measuring apparatus 1 may include three, four, five, six, seven, eight, etc. bending components 5. As shown, measuring apparatus 1 includes four bending components 5. Each one of bending components 5 may include web 5a and flange 5b. If desired, a bending component may have more than one web 5a associated with a flange 5b. For example, two webs may be associated with one flange. As another example, six webs may be associated with two flanges, etc. If desired, bending components may be arranged around the outside of hollow element 6a of measuring apparatus 1. If desired, the cross sections of webs 5a may be smaller than the cross section of flanges 5b that the respective webs 5a are associated with.

For example, thin webs 5a may be attached to the outside of torsion component 6 and extend radially away from the center of hollow element 6a. Flanges 5b with a bigger cross section may be located at the outer end of webs 5a at a location that has the greatest distance from the center of hollow element 6a. In other words, webs 5a may be arranged between flange 5b and torsion component 6.

The strains from the shear forces or the torsion moments may be lowest at the farthest location from the center of hollow element 6a (i.e., at locations 30). Being located at the farthest location from the center of hollow element 6a may allow flanges 5b to be subjected to largest bending strains. Accordingly, flanges 5b may provide most of the bending stiffness of bending component 5.

As shown in Figure 2, sensors 4 for determining the strains caused by bending moments may be arranged at location 30 in a symmetric layout at the outer edge of flange 5b. Arranging sensors 4 in a symmetric layout at the outer end of flanges 5b around the center of hollow element 6a may enable the measurement of strains caused by bending moments and may cancel out the effects of shear forces and/or torsion moments and/or axial loads. Averaging the strain measurements of sensors 4 at locations 30 may cancel out the effects of the bending moments and may allow to measure strains caused by axial forces.

If desired, sensors 4 for determining the strains caused by shear forces may be arranged at locations 20 in a symmetric layout on webs 5a. Webs 5a that are located between flanges 5b and hollow element 6a may suppress strains from the shear stresses between flanges 5b and hollow element 6a. If desired, webs 5a may have a smaller cross section than the cross section of flanges 5b. Thus, shear forces may be mainly transferred by webs 5a, while tension and compression forces are mainly transferred by flanges 5b. Such a configuration of webs 5a may cancel out the effects of bending and torsion moments.

For example, as shown in Figure 2, sensors 4 may be arranged at locations 10, 20 and 30. In some embodiments, sensors 4 may be arranged with an orientation of +/- 45° relative to a longitudinal axis perpendicular to the plane of Figure 2 through the center of hollow element 6a of measurement apparatus 1. If desired, at least some sensors 4 may be coupled in a bridge circuit. As an example, the bridge circuit may form a Wheatstone bridge that may eliminate strains in the same or in the opposite direction e.g. tension or compression strains on opposite locations or on perpendicular directions of the moments and forces along measuring apparatus 1. Combining at least two sensors 4 in a Wheatstone bridge may allow to measure at least one type of load effectively. The influence of the measurements of one force or moment on the measurements of the other ones (e.g., the influence of the measurements of the bending moments on the measurements of the torsion moments) may be cancelled out.

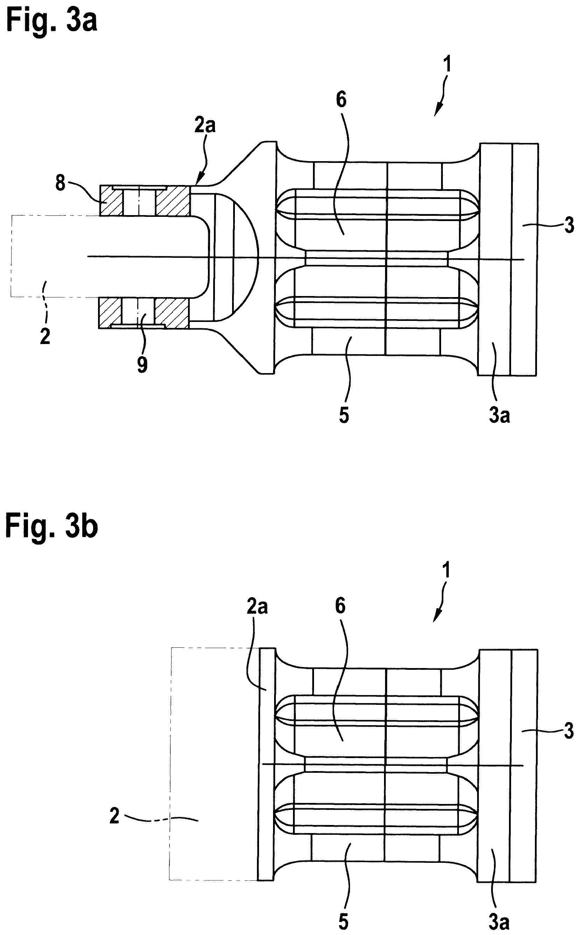

Figure 3A illustrates a cross section of measuring apparatus 1 located between first and second components 2, 3. Measuring apparatus 1 may receive first component 2 at first end 2a using bracket 8, as an example. Second end 3a of measuring apparatus 1 may connect to second component 3. Torsion component 6 is arranged between first 2a and second ends 3a of measuring apparatus 1. Bending components 5 are arranged between ends 2a, 3a of measuring apparatus 1 and extend radially from torsion element 6.

In some embodiments, end 2a of measurement apparatus 1 may include bracket 8 with sockets 9. If desired, component 2 may be fastened to sockets 9 of bracket 8 at end 2a of measurement apparatus 1. As an example, component 2 may be fastened to sockets 9 of bracket 8 using bolts, screws, pins, or any other suitable fastener. For example, the peripheral structure of a rotor blade may be fastened to sockets 9 of bracket 8 using bolts.

In some embodiments, end 3a may be a rigid part of measuring apparatus 1. Accordingly, component 3 may consist of a jig which is connected to end 3a.

Figure 3B shows a cross section of an illustrative measuring apparatus 1 located between first and second components 2, 3. As shown, measuring apparatus 1 may receive first component 2 at first end 2a. If desired, first component 2 may be attached at first end 2a using an adhesive substance. In some embodiments, first end 2a and component 2 may be threaded and screwed together. In other embodiments, component 2 may be attached to first end 2a using fasteners.

Second component 3 may be connected to second end 3a of measuring apparatus 1. Torsion component 5 may be arranged between first 2a and second ends 3a of measuring apparatus 1. Bending components 5 may be arranged between ends 2a, 3a of measuring apparatus 1 and extend radially from torsion element 6.

As shown in Figure 3B, end 2a may be connected to component 2 by an adhesive substance that is applied to one surface of component 2 or end 2a, or to both surfaces of component 2 and end 2a. The adhesive substance may bind component 2 with end 2a and resist their separation. Examples for the adhesive substance may include materials such as glue, cement, mucilage, or paste, etc or techniques such as laser sewing, mechanical fastening, thermal bonding, etc. Component 3 may include a jig which is connected to end 3a of measuring apparatus 1.

Four types of loads on component 2 may be observed with measuring apparatus 1: axial loads, torsional loads, out-of-plane loads, and in-plane loads. The bending loads may produce tensile and compressive stresses. Accordingly, tensile and compressive stresses may cause shear stresses in a cross section of component 2.

Torsion component 6 of measuring apparatus 1 may provide torsion stiffness. Torsion component 6 may be subject to the majority of the strains from torsion moments and axial forces.

Bending components 5 may provide bending stiffness. Bending components 5 may be subject to bending loads. Bending components 5 may be subject to the majority of the strains from bending moments and shear forces.

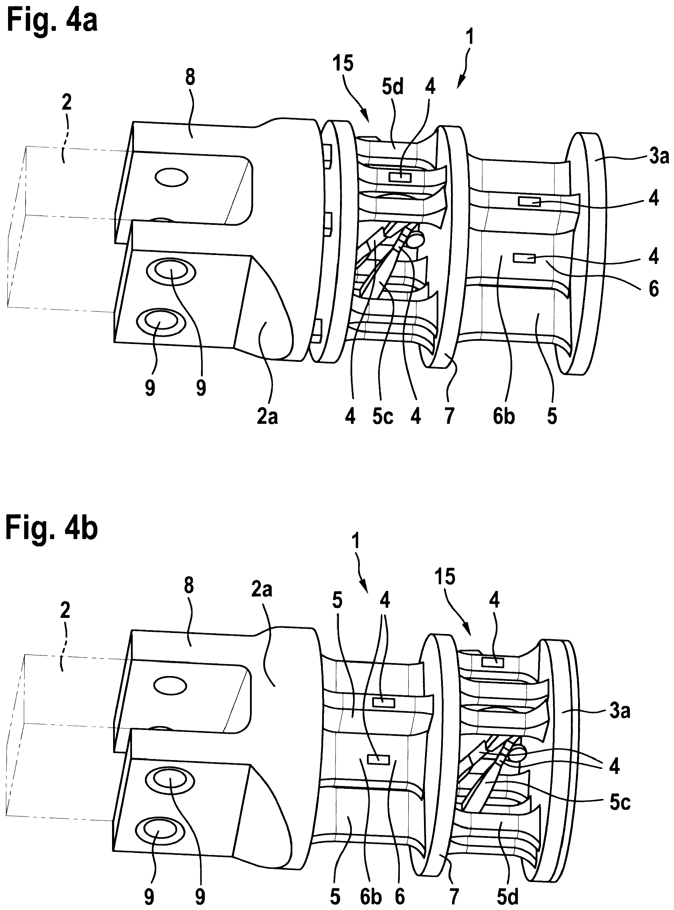

Exemplarily, as shown in Figures 4A and 4B, plate 7 may separate measuring apparatus 1 into two parts. A first part of measuring apparatus 1 may include torsion component 6 that is attached to plate 7, four bending components 5 that extend radially from the torsion component and a plurality of sensors 4 that are arranged on torsion and bending components 6, 5. Torsion component 6 may include surfaces 6b that are arranged between bending components 5. In some embodiments, at least a portion of measuring apparatus 1 of Figures 1, 2, 3A, and/or 3B may implement the first part of measuring apparatus 1. For example, torsion component 6 may include a hollow element such as hollow element 6a of Figure 2. As another example, bending components 5 may include webs and flanges such as webs 5a and flanges 5b of Figure 2.

In some embodiments, sensors 4 for determining the strains of bending components 5 may be arranged on flanges at predetermined locations. For example, sensors 4 may be arranged on flanges at locations that are farthest from a longitudinal axis which extends perpendicularly from the center of plate 7 through end 3a. The strains from shear forces or torsion moments may be very low at these farthest locations from the longitudinal axis, which may allow to cancel out the effects of the axial forces and/or torsion moments.

If desired, sensors 4 for determining the strains of the torsion component may be arranged on surfaces 6b, which may allow to measure the strains of the torsion moments and cancel out the effects of the bending moments.

A second part of measuring apparatus 1 may include bending component 15 that is attached to plate 7. As shown, bending component 15 may include eight flanges 5d that extend parallel to a longitudinal axis which extends perpendicularly from plate 7 through end 3a and two bars 5c that extend diagonally to the longitudinal axis. If desired, bending component 15 may include a different number of flanges 5d and/or bars 5c. For example, bending component 15 may include three, four, five, six, seven, eight, nine, ten, etc. flanges 5d. If desired, bending component 15 may include three, four, five, six, seven, eight, etc. bars 5c.

A plurality of sensors 4 may be arranged on bending component 15. In some embodiments, sensors 4 for determining the strains of the bending moments may be arranged on flanges 5d of bending component 15. Arranging sensors 4 on flanges 5d in a direction that is parallel to the longitudinal axis that extends perpendicularly from the center of plate 7 through end 3a may allow to cancel out the effects of shear forces and torsion moments.

If desired, sensors 4 for determining shear forces may be arranged on bars 5c of bending component 15. Arranging sensors 4 diagonally to the longitudinal axis that extends perpendicularly from the center of plate 7 through end 3a may allow to cancel out the effects of bending and torsion moments.

In some embodiments, sensors 4 may include strain gauges for determining strains of at least one of torsion components 6 or bending components 5, 15.

Figure 4A shows an illustrative measuring apparatus 1 that includes torsion component 6, four bending components 5 that extend radially from torsion component 6, and additional bending component 15. As shown, additional bending component 15 may be arranged between plate 7 and end 2a. A plurality of sensors 4 may be arranged on torsion and bending components 6, 5, 15.

Figure 4B shows an illustrative measuring apparatus 1 that includes torsion component 6, four bending components 5 that extend radially from torsion component 6, and additional bending component 15. As shown, additional bending component 15 may be arranged between plate 7 and end 3a. A plurality of sensors 4 may be arranged on torsion and bending components 6, 5, 15.

In some embodiments, bars 5c being spatially separated from flanges 5d are arranged diagonally from one end of at least one flange 5d to the other opposite end of another flange 5d. In the scenario in which a rotor blade embodies component 2, said arrangement of bars 5c may allow the flanges 5d to be subjected to flapping and lead-lag moments of the rotor blade and bars 5c to be subjected to the shear forces from flapping and lead-lag motions of the rotor blade.

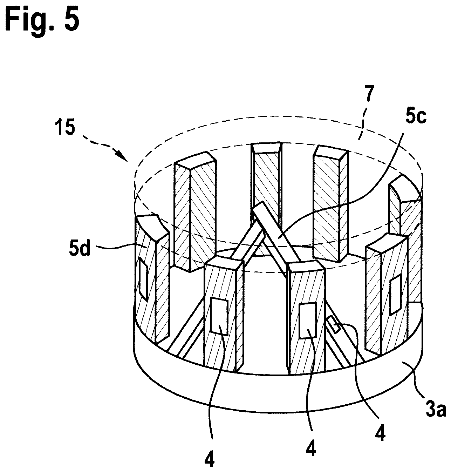

Figure 5 shows an illustrative bending component 15 such as bending component 15 of Figures 4A or 4B that is arranged between plate 7 and end 3a. As shown, bending component 15 may include eight flanges 5d that are arranged parallel to a longitudinal axis that extends perpendicularly from the center of plate 7 through end 3a, two bars 5c that extend diagonally to the longitudinal axis, and a plurality of sensors 4. If desired, flanges 5d and bars 5c may be spatially separated from each other.

In some embodiments, bars 5c may have a thinner cross section than flanges 5d. Arranging thin bars 5c diagonally to the longitudinal axis that extends perpendicularly from the center of plate 7 through end 3a between flanges 5d may enable the suppression of strains from the shear stresses between flanges 5d. Accordingly, the majority of shear stresses may be subjected to bars 5c.

Therefore, sensors 4 for determining the shear forces may be arranged on bars 5c of bending component 15. Arranging sensors 4 diagonally to the longitudinal axis that extend perpendicularly from the center of plate 7 through end 3a may allow to cancel out the effects of bending and torsion moments.

In some embodiments, flanges 5d may be located radially at the farthest location from the longitudinal axis, where the strains from shear forces or torsion moments are comparatively low, which may allow flanges 5d to be subjected to the largest bending strains.

Accordingly, sensors 4 for determining the strains of the bending moments may be arranged on flanges 5d of bending component 15. Arranging the sensors 4 parallel to the longitudinal axis that extends perpendicularly from the center of plate 7 through end 3a may allow to cancel out the effects of axial and shear forces and torsion moments.

In some embodiments, sensors 4 may include strain gauges for determining strains of at least one of torsion components 6 or bending components 5, 15.

In some embodiments, for example in scenarios in which component 2 is not being affected by torsion moments, measuring apparatus 1 may consist of only bending component 15.

In some embodiments, measuring apparatus 1 may be used for measuring flight moments and forces of different mountings on the outside of an aerial vehicle (e.g., a drone) or measuring wind tunnel balances of e.g. vehicles.

It should be noted that the above-described embodiments are merely described for illustration purposes, but not in order to restrict the present invention thereto. Instead, multiple modifications and variations of the presented embodiments are possible and should, therefore, also be considered as being part of the invention.

For example, measuring apparatus 1 of Figures 1 and 2 is shown with four bending components 5 that include four flanges 5b and four webs 5a. However, measuring apparatus 1 of Figures 1 and 2 may have any number of bending components 5 with any number of flanges 5b and webs 5a. The number of webs 5a may be selected to be the same as or greater than the number of flanges 5b, if desired. For example, measuring apparatus 1 of Figures 1 and 2 may have one bending component 5 with one flange 5b and one web 5a, one bending component 5 with one flange 5b and two webs 5a, etc.

As another example, measuring apparatus 1 of Figure 2 is shown to include one torsion component 6 with one hollow element 6a that is surrounded by four surfaces 6b. However, measuring apparatus 1 of Figures 1 and 2 may have any number of torsion components 6 with any number of hollow elements 6a that are surrounded by any number of surfaces.

Moreover, in Figures 4A and 4B, it is shown that bending component 15 of measuring apparatus 1 includes eight flanges 5d and two bars 5c that are arranged diagonally to the longitudinal axis that extends perpendicularly from the center of plate 7 through end 3a between flanges 8. However, measuring apparatus 1 of Figures 4A and 4B may have any number of bending components 15 with any number of flanges 5d and bars 5c. If desired, the cross section of flanges 5b, 5d and/or webs 5a and/or bars 5c of bending components 5, 15 may take any shape including polygonal, irregular, or rounded shapes such as triangular, rectangular, trapezoidal, round, oval, elliptical, or hourglass shapes. In some embodiments, the cross section of any pair of flanges 5d and/or any pair of bars 5c may be different from each other. If desired, the cross section of any flange 5d or bars 5c may vary within the respective flange 5d or bar 5c. For example, the cross section of flange 5d or a bar 5c may have a rectangular shape at the attachment with plate 7 and end 3a and a restricted rectangular shape at a predetermined distance from plate 7 and end 3a. As another example, the cross section of flange 5d or bar 5c may have a round shape et the attachment with plate 7 and end 3a and an octagonal shape at a predetermined distance from plate 7 and end 3a.

Furthermore, the described and illustrated configurations of measuring apparatus 1 can be varied arbitrarily without influencing an underlying functionality thereof. As a consequence, corresponding configurations of component 2 can be adapted as required, and so on.

### Reference List

- 1: measuring apparatus
- 2: first component
- 2a: end of measuring apparatus
- 3: second component
- 3a: end of measuring apparatus
- 4: sensor
- 5: bending component
- 5a: web
- 5b: flange
- 5c: bar
- 5d: flange
- 6: torsion component
- 6a: hollow element
- 6b: surface
- 7: plate
- 8: bracket
- 9: socket
- 10: location
- 15: bending component
- 20: location
- 30: location

## Claims

1. A measuring apparatus (1) for determining loads applied to a first component (2) that is connected to a second component (3), wherein the first component (2) is subject to being affected by torsion, bending moments, axial forces, or shear forces, comprising:
a first end (2a) of the measuring apparatus that receives the first component (2);
a second end (3a) of the measuring apparatus that is connected to the second component (3);
a torsion component (6) arranged between the first (2a) and second ends (3a) that provides torsion stiffness and comprises a hollow element (6a) with a closed cross section and at least two surfaces (6b);
at least two bending components (5) arranged between the first (2a) and second ends (3a) that provide bending stiffness and extend radially from the torsion component (6); and
a plurality of sensors (4) that are arranged on the torsion component (6) and on the at least two bending components (5).

2. The measuring apparatus (1) of claim 1, wherein the plurality of sensors (4) further comprises:
strain gauges for determining strains of at least one of the torsion component (6) or the at least two bending components (5), wherein at least one of torsion, bending moments, axial forces, or shear forces applied to the first component (2) is determined based on the strains.

3. The measuring apparatus (1) of claims 1 or 2, wherein at least a portion of the plurality of sensors (4) is coupled in a bridge circuit.

4. The measuring apparatus (1) of claim 3, wherein at least one sensor (4) of the plurality of sensors (4) is arranged at a location (10) that is essentially centered on at least one of the at least two surfaces (6b).

5. The measuring apparatus (1) of any one of claims 1 to 3, wherein at least one of the at least two bending components (5) further comprises:
a flange (5b) having a first cross section diameter; and
a web (5a) having a second cross section diameter.

6. The measuring apparatus (1) of claim 5, wherein the first cross section diameter is greater than the second cross section diameter.

7. The measuring apparatus (1) of claim 6, wherein shear forces cause a bigger strain in the web (5a) than in the flange (5b).

8. The measuring apparatus (1) of claim 5, wherein the web (5a) is arranged between the flange (5b) and the torsion component (6).

9. The measuring apparatus (1) of claim 8, wherein at least one sensor of the plurality of sensors (4) is arranged on the flange (5b) at a predetermined location (30).

10. The measuring apparatus (1) of any one of claims 1 to 3, further comprising:
a plate (7) that is attached to the torsion component (6); and
an additional bending component (15) that is arranged between the plate (7) and the first end (2a).

11. The measuring apparatus (1) of any one of claims 1 to 3, further comprising:
a plate (7) that is attached to the torsion component (6); and
an additional bending component (15) that is arranged between the plate (7) and the second end (3a).

12. The measuring apparatus (1) of any one of claims 10 or 11, wherein a longitudinal axis extends perpendicularly from the plate (7) and wherein the additional bending component (15) further comprises:
at least one flange (5d) that extends parallel to the longitudinal axis from the plate (7); and
at least one diagonal bar (5c) that extends diagonally to the longitudinal axis from the plate.

13. The measuring apparatus (1) of claim 12, wherein at least one sensor of the plurality of sensors (4) is arranged on the at least one diagonal bar (5c).

14. The measuring apparatus (1) of claim 12, wherein the at least one flange (5d) and the at least one diagonal bar (5c) are spatially separated from each other.

15. A rotorcraft with a measuring apparatus (1) according to any one of the preceding claims.
